# EUROPÄISCHE PATENTSCHRIFT

(11) **EP 2 009 164 B1**
(45) Veröffentlichungstag und Bekanntmachung des Hinweises auf die Patenterteilung: **03.08.2011**
(21) Anmeldenummer: 08010154.6
(22) Anmeldetag: 04.06.2008
(51) Int. Cl.: D04H 13/00, B29B 11/14, B32B 5/26, B65H 39/16

(54) **Verfahren zur Verbindung eines trockenen Faserbands mit einem trockenen Faserstrang**
Method to bind a dry web of fibres with a dry bundle of fibres
Procédé de liaison d'une bande de fibres sèche et d'un faisceau de fibres sec

(30) Priorität: 27.06.2007 DE 102007029762
(43) Veröffentlichungstag der Anmeldung: 31.12.2008
(73) Patentinhaber: EADS Deutschland GmbH, 85521 Ottobrunn (DE)
(72) Erfinder: Kittel, Lucie, 86159 Augsburg (DE); Utecht, Stefan, 86916 Kaufering (DE)

(56) Entgegenhaltungen:
- DE-A1- 2 004 758
- DE-C- 617 877
- DE-T2- 69 814 129
- US-A- 4 151 031

## Beschreibung

Die Erfindung betrifft ein Verfahren zur Verbindung eines trockenen Faserbands mit einem trockenen Faserstrang. Diese Erfindung betrifft generell die Herstellung von faserverstärkten Bauteilen aus Kunststoff, insbesondere für die Luftfahrt.

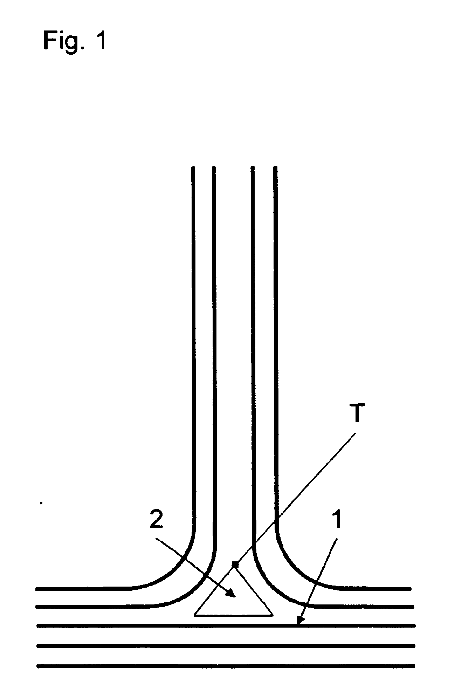

Der Lagenaufbau von Profilen/Stringern aus Faserverbundwerkstoffen (z.B. CFK, GFK, aramidfaserverstärkter Kunststoff oder eine Kombination dieser Materialien) bedingt für Luftfahrtanwendungen den Einsatz von so genannten Zwickeln 2 (Fig. 1), welche den Leerraum bei T-Stößen bilden sollen. Dieser Zwickel 2 weist einen dreidimensionalen, typischerweise einen dreieckigen, z.B. gleichschenkligen Querschnitt auf.

Zur Herstellung eines solchen Bauteils wird zunächst der Zwickel 2 auf der Fußlage 1 des Bauteils aufgebracht. Die Erfindung betrifft diese Verbindung von Zwickel und Fußlage als ein Teilprozess im Herstellungsverfahren des gesamten Bauteils. Die Fußlage kann z.B. als Fasergelege oder Fasergewebe ausgebildet sein.

Für eine eindeutige Positionierung der drei Kanten des Zwickels 2 wird bei seiner Herstellung ein so genannter Tracerfaden T in den Zwickel eingeflochten. Dieser kennzeichnet diejenige Kante des Zwickels, die von der Fußlage weg zeigt.

Bedingt durch den Herstellungsprozess des Zwickels (Flechten einzelner dünner Fäden, die selbst wiederum aus parallelen oder verdrillten Rovings bestehen, kann dieser fertigungsbedingt verdrillt sein, so dass er vor der Verarbeitung entdrillt werden muss.

Die Verbindung von Zwickel und Fußlage erfolgt derzeit rein manuell. Entsprechend den Abmessungen des Bauteils, in dem der Zwickel verarbeitet werden soll, wird dieser von einer Vorratsrolle auf die notwendige Länge zugeschnitten. Ein Ende des verdrillten Zwickels wird an einem Positionierwerkzeug mit Dreiecksnut fixiert, so dass der Tracerfaden in die Nut zeigt. Danach wird der Zwickel manuell entdrillt. Anschließend wird auch sein anderes Ende am Positionierwerkzeug fixiert.

Im nächsten Verarbeitungsschritt erfolgt die Verbindung von Zwickel und Fußlage. Dazu wird die Fußlage auf das Positionierwerkzeug gelegt. Da es sich bei Zwickel und Fußlage um trockene Bauteile handelt, die also nicht bereits mit einem Harz getränkt sind, wird zur Verbindung der beiden Elemente ein Bindemittel, z.B. ein thermoplastisches Bindervlies, eingesetzt, es können jedoch auch andere Kleber oder Bindervarianten wie Puderbinder zur Fixierung der Elemente verwendet werden. Eine Seite der Fußlage ist mit einem solchen, dünnen Bindervlies versehen. Die Fixierung des Zwickels mit der Fußlage erfolgt durch Wärmeeintrag, z.B. mit einer beheizten Metallplatte ('Bügeleisen'). Das auf der Fußlage befindliche Bindervlies schmilzt durch die Wärmeeinwirkung und verklebt den Zwickel nach seiner Abkühlung.

In der DE 698 14 129 T2 ist ein Verfahren zur Herstellung eines Halbzeugs aus mehreren Matten oder Bändern im kontinuierlichen, ununterbrochenen Betrieb beschrieben. Dabei erfolgt der Transport der zu verbindenden Matten oder Bänder über Walzen. Die Verbindung erfolgt durch Erwärmung und Druckbeaufschlagung eines Bindemittels mittels aufgeheizter Platte und Druckschlitten.

Die DE 2 201 334 A beschreibt ein Verfahren zum Laminieren von einzelnen Filmschichten als Ketten und Schüsse. Die zu verbindenden Filmschichten werden durch Unterdruck angesaugt und durch elektrostatische Aufladung verbunden.

Aus der US 3,726,751 A, der US 4,460,633 A sowie der DE 103 01 646 A1 sind jeweils Verfahren zur Herstellung flächenhafter Faserhalbzeuge bekannt, bei denen einzelne Fäden oder Faserstränge gekreuzt miteinander verbunden werden.

Der Erfindung liegt die Aufgabe zugrunde, ein Verfahren zu schaffen, mit dem die Verbindung von Fußlage und Zwickel schneller und kostengünstiger vorgenommen werden kann. Insbesondere soll das aufwändige Entdrillen des Zwickels entfallen.

Diese Aufgabe wird mit dem Verfahren nach Anspruch 1 gelöst. Vorteilhafte Ausführungen der Erfindung sind Gegenstand weiterer Ansprüche.

Der Zwickel wird im Folgenden auch als Faserstrang bezeichnet. Es handelt sich um ein schnur- oder seilartiges Gebilde. Die Fußlage wird im Folgenden auch als Faserband bezeichnet. Da seine Breite wesentlich größer ist als seine Dicke, handelt es sich um ein flächenhaftes Gebilde. Die Breite des Faserstrangs ist typischerweise wesentlich geringer als die Breite des Faserbands, z.B. mindestens im Verhältnis 1:5.

Gemäß dem erfindungsgemäßen Verfahren erfolgt die Verbindung von Faserband und Faserstrang in einem fortlaufenden, automatisierten Prozess. Faserband und Faserstrang werden fortlaufend von ihren Vorratsrollen abgewickelt, aufeinander positioniert und unter Zuführung von Wärme miteinander verbunden. Dabei verlaufen Faserstrang und Faserband beide in einer gemeinsamen Richtung, die der Richtung ihren Hauptachsen entspricht. Mit anderen Worten, Faserstrang und Faserband kreuzen sich nicht, sondern verlaufen parallel zueinander. Die Verbindung wird mittels eines durch Zuführung von Wärme aktivierbaren Bindemittels erreicht, das sich auf dem Faserband befindet. Die Wärmezufuhr erfolgt mittels Heißluftgebläse. Das Bindemittel kann z.B. ein thermoplastisches Bindervlies sein. Es können jedoch auch andere Kleber oder Bindervarianten wie Puderbinder eingesetzt werden.

Ein Entdrillen des Faserstrangs ist nicht mehr notwendig, da der Faserstrang nun direkt und fortlaufend von der Vorratsrolle (wo er im unverdrillten Zustand vorliegt) herunter verarbeitet wird.

Die Erfindung besitzt insbesondere die folgenden Vorteile:
- Verkürzung der Fertigungszeiten
- Reproduzierbarkeit der Verfahrensprodukte
- Optimierung der Positioniertoleranzen.

Gemäß der Erfindung erfolgt der Transport von Faserstrang und Faserband mittels Förderband, auf welchem Faserband und Faserstrang übereinander abgelegt werden. Dabei ist das Förderband luftdurchlässig ausgebildet, damit der Faserstrang auf dem Förderband durch Ansaugen fixiert werden kann.

Erfindungsgemäß sind im Ansaugbereich Faserband und darauf positionierter Faserstrang von einer luftundurchlässigen Folie abgedeckt. Diese verbessert die Saugwirkung, so dass das Faserband sicher auf dem Förderband fixiert ist. Die Folie schmiegt sich eng an der äußeren Oberfläche des von Faserband und Faserstrang gebildeten Gesamtkörpers an. Dieser Effekt ermöglicht die zuverlässige Fixierung des Faserstrangs auf dem Faserband, da der Faserstrang somit lateral keine Bewegungsmöglichkeit mehr besitzt.

Eine zusätzliche Maßnahme zur Positionierung und Fixierung des Faserstrangs auf dem Faserband besteht darin, eine Formmatrize zu verwenden, die den Faserstrang beim Durchgang in die vorgesehen Position zwingt, und die zur Aktivierung des Bindemittels (z.B. Aufschmelzen eines auf dem Faserband befindlichen Bindervlieses) auch beheizbar ausgelegt werden kann.

Der Vorteil der Absaugung mit luftundurchlässiger Folie ist, dass beim Transport kein Verzug innerhalb des Faserstrangs auftreten kann. Darüber hinaus geschieht die Positionierung ohne Verschleiß (keine Abrasion an Bauteilen). Außerdem kann die Folie ohne Weiteres auch durchsichtig ausgeführt werden, so dass sich eine verbesserte Möglichkeit der Qualitätsprüfung ergibt, denn die korrekte Position des Tracerfadens kann dann visuell überwacht werden.

Insgesamt führt die Kombination der Maßnahmen:
- Wärmezufuhr zur Kleberaktivierung mittels Gebläse,
- Transport auf einem Förderband,
- Positionierung/Fixierung von Faserband und Faserstrang durch Unterdruck, dabei Abdecken von Faserband und Faserstrang durch eine luftundurchlässige Folie zu einem sehr kontaktarmen Verfahren, welches eine sehr schonende Verarbeitung der Materialien ermöglicht und insbesondere einen Materialverzug weitgehend vermeidet.

Die Folie kann z.B. als Endlosfolie ausgebildet werden, die vor dem Bereich der Zuführung von Wärme von einer Vorratsrolle abgewickelt wird und nach Durchlaufen des Bereichs der Zuführung von Wärme von einer Aufroll-Rolle wieder aufgenommen wird.

Faserband und Faserstrang können in den üblichen Fasermaterialen ausgebildet sein, insbesondere Kohlefasern, Glasfasern, Aramidfasern. Auch können Faserband und Faserstrang aus unterschiedlichen Fasermaterialien bestehen.

Konkrete Ausführungen der Erfindung werden im Folgenden anhand von Fig. unter Bezugnahme auf Zeichnungen näher erläutert. Es zeigen:
- Fig. 1: eine schematische Zeichnung zum Aufbau eines Faserverbundbauteils unter Einsatz eines Zwickels, wie bereits in der Beschreibungseinleitung beschrieben;
- Fig. 2: zeigt in schematischer Darstellung eine Vorrichtung zur Durchführung des erfindungsgemäßen Verfahrens;
- Fig. 3: zeigt eine Draufsicht auf das Förderband mit darauf befindlichem Faserband, Faserstrang und luftdichter Folie.

Fig. 1 zeigt ein Beispiel für den Einsatz eines Faserstrangs 2 beim Aufbau eines Faserverbundbauteils, der einen Leerraum innerhalb des Aufbaus ausfüllen soll (hier an einem T-Stoß). Der Faserstrang weist einen dreidimensionalen Querschnitt auf und kann z.B. dreieckig, rund oder oval ausgebildet sein. Selbstverständlich sind auch andere Formen möglich, je nach auszufüllendem Leeraum. Der Zwickel entsteht durch Flechten einzelner Rovings (z.B. 16).

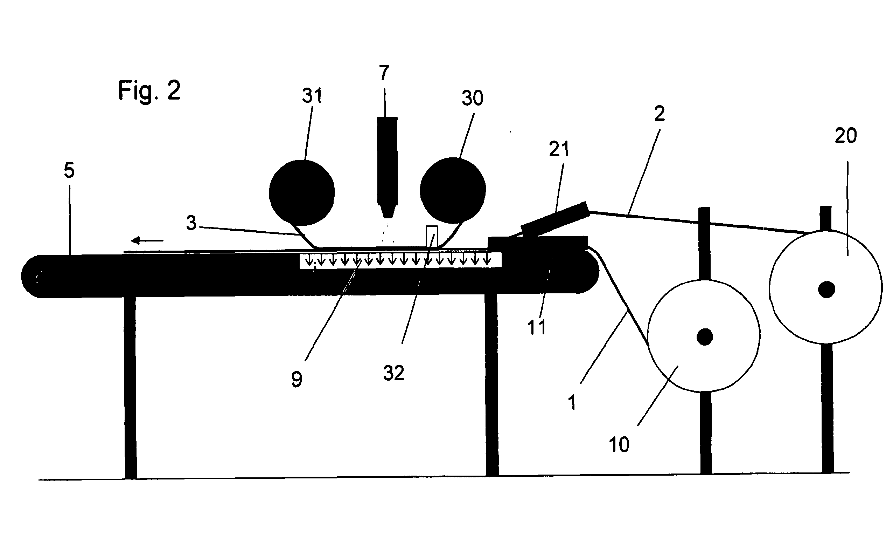

Fig. 2 zeigt eine Vorrichtung zur Durchführung des erfindungsgemäßen Verfahrens zur Verbindung von Faserband 1 und Faserstrang 2, die jeweils als Endlosmaterialien ausgebildet sind. Faserband 1 und Faserstrang 2 sind jeweils auf einer Vorratsrol-Ie10,20 gewickelt, wobei auf dem Faserband ein Bindemittel, hier ein dünnes thermoplastisches Bindervlies aufgebracht ist. Das Abwickeln und der Transport von Faserband 1 (mit darauf vorhandenem Bindemittel) und Faserstrang 2 wird mittels eines luftdurchlässigen, umlaufenden Förderbands 5, z.B. aus Filz realisiert. Von den Vorratsrollen aus werden Faserband 1 und Faserstrang 2 über Positionierelemente 11,21 auf das Förderband 5 geführt. Die Führung und das Positionieren des Faserbands 1 erfolgt in dieser Ausführung über Führungsbleche 11, während der Faserstrang 2 an einer Positioniermatrize 21 entlang geführt wird. Zusätzlich können weitere Führungselemente, z.B. ein Niederhalter, der den Faserstrang auf das Faserband drückt, vorhanden sein.
   Nach Passieren der Positionierungselemente 11,21 erreichen Faserband 1 und Faserstrang 2 den Ansaugbereich eines Sauggebläses, wodurch das Faserband 1 auf dem Förderband 5 fixiert wird. Der Ansaugbereich wird realisiert durch den mit Öffnungen versehenen Ansaugkasten 9 des Gebläses, welcher sich unterhalb des Förderbands 5 befindet. Die Ansaugung erfolgt durch das Förderband 5 hindurch. Der Faserstrang 2 liegt nun auf dem Faserband 1 entsprechend seiner durch die Führungselemente 11,21 vorgegebenen Sollposition.
   Zur Verbesserung der Saugwirkung und zur sicheren Fixierung des Faserstrangs 2 auf dem Faserband 1 wird im Ansaugbereich eine luftundurchlässige und hitzebeständige Folie 3 in den Verfahrensprozess eingebracht, die das Faserband 1 mit dem darauf befindlichen Faserstrang 2 abdeckt. Durch die Absaugung wird die Folie 3 auf die Oberfläche von Faserband 1 und Faserstrang 2 gepresst, wodurch der Faserstrang 2 sicher auf dem Faserband 1 fixiert wird.

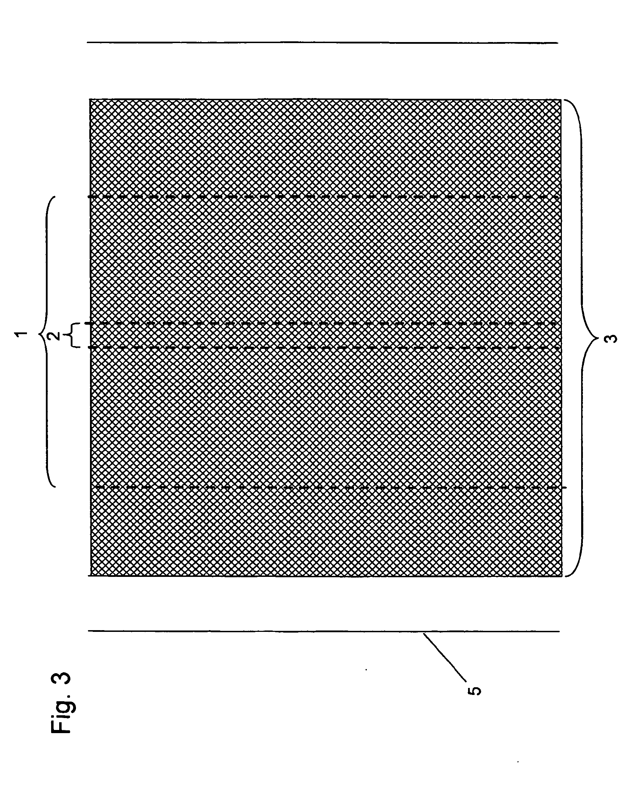

Fig. 3 zeigt hierzu eine Draufsicht auf die Vorrichtung zur Durchführung des erfindungsgemäßen Verfahrens. Man erkennt das Förderband 5 aus Filz, auf dem das Faserband 1 durch die Ansaugung fixiert ist. Auf dem Faserband 1 ist der Faserstrang 2 positioniert. Faserband 1 und Faserstrang 2 werden überdeckt durch die luftundurchlässige, transparente Folie 3.
   Nachdem Faserstrang 2 und Faserband 1 positioniert und auf dem Förderband 5 sowie aufeinander sicher fixiert sind, durchlaufen sie den Bereich der Zuführung von Wärme. Erfindungsgemäß wird ein Heißluftgebläse 7 eingesetzt, um den thermoplastischen Kleber des Bindervlieses, das sich auf dem Faserband 1 befindet, zu schmelzen. Dadurch werden Faserband 1 und Faserstrang 2 dauerhaft verbunden.
   Die transparente Folie 3 wird von einer (in Richtung des Materialflusses gesehen) vor dem Bereich der Zuführung von Wärme angeordneten Vorratsrolle 30 abgewickelt. Mit einer Aufroll-Rolle 31, die sich (in Richtung des Materialflusses gesehen) hinter dem Bereich der Zuführung von Wärme befindet, wird die Folie 3 wieder aufgenommen und kann einer Wiederverwendung zugeführt werden. Mit dem Niederhalter 32 wird die Folie 3 in eine Position gezwungen, die nahe über der Oberfläche des Faserbands 2 liegt, um die Ansaugung der Folie 3 zu Erleichtern.
   Faserband 1 und der damit nun fest verbundener Faserstrang 2 verlassen die Vorrichtung und können direkt weiterverarbeitet werden, z.B. in dem sie auf die benötigten Längen zugeschnitten werden. Bei dem entstandenen Gebilde aus Faserstrang und Faserband handelt es sich um ein dreidimensionales Gebilde, im Gegensatz zu einem flachen, schichtartigen Gebilde.
   Durch die Ansaugung der Materialien auf das Förderband ist für den Transport von Faserstrang und Faserband neben dem Antrieb des Förderbands selbst kein weiterer Antrieb notwendig.
   Der Aufbau der Vorrichtung gewährleistet, dass die zu verbindenden Materialien stets definiert zueinander positioniert sind.
   Mit dem erfindungsgemäßen Verfahren wird ein kontinuierlicher und vollautomatischer Betrieb zur Verbindung von Faserband und Faserstrang erzielt. Die Geschwindigkeit der zu verbindenden Materialien kann z.B. im Bereich von 20 bis 50 m pro Stunde liegen.
   Im Rahmen der Erfindung liegt auch der Fall, dass das Faserband mehrlagig ausgebildet ist. In diesem Fall können die einzelnen Lagen von getrennten Rollen abgewickelt werden. Die Verbindung zwischen Faserband und Faserstrang erfolgt auf der obersten Lage des Faserbands. Da die einzelnen Lagen jeweils mit einem Bindemittel, z.B. einem Bindevlies, versehen sind, sorgt die Wärmeeintrag auch für die dauerhafte Verbindung der einzelnen Lagen des Faserbands untereinander.

## Patentansprüche

1. Verfahren zur Verbindung eines trockenen Faserbands (1) mit einem einzelnen trockenen Faserstrang (2) in axialer Richtung und im kontinuierlichen, ununterbrochenen Betrieb, wobei auf dem Faserband (1) ein durch Zuführung von Wärme aktivierbares Bindemittel vorhanden ist, der Faserstrang (2) mindestens eine ebene Mantelfläche aufweist, und der Faserstrang einen dreidimensionalen Querschnitt aufweist, mit folgenden Verfahrensschritten:
- Abwickeln von Faserband (1) und Faserstrang (2) von jeweils einer Vorratsrolle (10,20),
- Fixieren des Faserbands auf einem Förderband mittels Ansaugen,
- Positionieren der ebenen Mantelfläche des Faserstrangs (2) auf dem Faserband (1) während des Abwickelvorgangs,
- Abdecken des Faserbands (1) und dem darauf positionierten Faserstrang (2) mit einer luftundurchlässigen Folie (3) im Ansaugbereich, um die Saugwirkung zu verbessern,
- Zuführung von Wärme während des Abwickelvorgangs mittels Heißluftgebläse (7), um das Aktivieren des Bindemittels und das Verkleben von Faserband (1) und Faserstrang (2) zu bewirken.

2. Verfahren nach Anspruch 1, **dadurch gekennzeichnet, dass** das Abwickeln von Faserstrang (2) und Faserband (1) mit dem Förderband (5) bewirkt wird.

3. Verfahren nach Anspruch 1 oder 2, **dadurch gekennzeichnet, dass** die Folie (3) als Endlosfolie ausgebildet ist, die von einer Vorratsrolle (30) abgewickelt wird und nach Durchlaufen des Bereichs der Zuführung von Wärme von einer Aufroll-Rolle (31) wieder aufgenommen wird.

4. Verfahren nach einem der vorangehenden Ansprüche, **dadurch gekennzeichnet, dass** das Faserband (1) mehrlagig ausgebildet ist, wobei die einzelnen Lagen jeweils von einer Vorratsrolle abgewickelt werden.

5. Verfahren nach einem der vorangehenden Ansprüche, **dadurch gekennzeichnet, dass** das Positionieren von Faserband (1) und Faserstrang (2) mittels Matrize (21) und/oder als Führungsblech (11) erfolgt.

## Claims

1. Method for binding a dry sliver (1) with a dry fibre strand (2) in the axial direction and in continuous, uninterrupted operation, wherein a binding agent which can be activated by supplying heat is present on the sliver (1), the fibre strand (2) has at least one planar lateral surface and the fibre strand has a three-dimensional cross section, having the following method steps:
- unwinding the sliver (1) and the fibre strand (2) from a respective supply roll (10, 20),
- fixing the sliver on a conveying belt by means of suction,
- positioning the planar lateral surface of the fibre strand (2) on the sliver (1) during the unwinding process,
- covering the sliver (1) and the fibre strand (2) positioned thereon with an airtight film (3) in the suction region in order to improve the suction effect,
- supplying heat during the unwinding process by means of a hot-air fan (7) in order to activate the binding agent and to adhesively bond the sliver (1) and the fibre strand (2).

2. Method according to Claim 1, **characterized in that** the fibre strand (2) and the sliver (1) are unwound by way of the conveying belt (5).

3. Method according to Claim 1 or 2, **characterized in that** the film (3) is in the form of an endless film which is unwound from a supply roll (30) and is taken up again on a rolling-up roll (31) once it has passed through the region in which heat is supplied.

4. Method according to one of the preceding claims, **characterized in that** the sliver (1) is in a multilayer form, wherein the individual layers are unwound from a respective supply roll.

5. Method according to one of the preceding claims, **characterized in that** the sliver (1) and the fibre strand (2) are positioned by means of a die (21) and/or as a guide plate (11).

## Revendications

1. Procédé de liaison d'une bande fibreuse sèche (1) à un faisceau de fibres sec (2) individuel dans la direction axiale et dans un fonctionnement en continu, sans interruption, dans lequel un liant activable par apport de chaleur est prévu sur la bande fibreuse (1), le faisceau de fibres (2) présente au moins une surface d'enveloppe plane, et le faisceau de fibres présente une section transversale tridimensionnelle, comprenant les étapes de procédé suivantes:
- déroulement de la bande fibreuse (1) et du faisceau de fibres (2) d'un rouleau de réserve respectif (10, 20),
- fixation de la bande fibreuse sur une bande de transport au moyen d'une aspiration,
- positionnement de la surface d'enveloppe plane du faisceau de fibres (2) sur la bande fibreuse (1) pendant l'opération de déroulement,
- recouvrement de la bande fibreuse (1) et du faisceau de fibres (2) positionné sur celle-ci avec un film (3) imperméable à l'air, dans la région d'aspiration, afin d'améliorer l'effet d'aspiration,
- apport de chaleur pendant l'opération de déroulement au moyen d'une soufflante d'air chaud (7), afin de provoquer l'activation du liant et le collage de la bande fibreuse (1) et du faisceau de fibres (2).

2. Procédé selon la revendication 1, **caractérisé en ce que** le déroulement du faisceau de fibres (2) et de la bande fibreuse (1) est réalisé avec la bande transporteuse (5).

3. Procédé selon la revendication 1 ou 2, **caractérisé en ce que** le film (3) est réalisé sous forme de film sans fin, qui est déroulé depuis un rouleau de réserve (30) et qui est à nouveau repris par un rouleau d'enroulement (31) après le passage par la région d'apport de chaleur.

4. Procédé selon l'une quelconque des revendications précédentes, **caractérisé en ce que** la bande fibreuse (1) est réalisée en plusieurs couches, les couches individuelles étant à chaque fois déroulées d'un rouleau de réserve.

5. Procédé selon l'une quelconque des revendications précédentes, **caractérisé en ce que** le positionnement de la bande fibreuse (1) et du faisceau de fibres (2) a lieu au moyen d'une matrice (21) et/ou sous forme d'une tôle de guidage (11).
